Europäisches Patentamt

European Patent Office

Office européen des brevets

(19)

(11) Veröffentlichungsnummer: **0 293 590**
**B1**

(12) **EUROPÄISCHE PATENTSCHRIFT**

(45) Veröffentlichungstag der Patentschrift: **30.01.91**

(51) Int. Cl.⁵: **D 01 G 11/04, D 01 G 15/90**

(21) Anmeldenummer: **88106478.6**

(22) Anmeldetag: **22.04.88**

(54) **Reisswolf für die Textilindustrie.**

(30) Priorität: **20.05.87 DE 3716823**

(43) Veröffentlichungstag der Anmeldung:
**07.12.88 Patentblatt 88/49**

(45) Bekanntmachung des Hinweises auf die
Patenterteilung:
**30.01.91 Patentblatt 91/05**

(84) Benannte Vertragsstaaten:
**BE DE ES FR GB IT**

(56) Entgegenhaltungen:
**BE-A- 496 665**
**BE-A- 531 957**
**DE-A-1 510 320**
**FR-A- 952 978**
**FR-A-1 170 403**

(73) Patentinhaber: **H. SCHIRP GMBH & CO. KG**
**Bissingstrasse 5**
**D-5600 Wuppertal 11 (DE)**

(72) Erfinder: **Wirths, Wolfgang**
**Jägerhofstrasse 116b**
**D-5600 Wuppertal 1 (DE)**

(74) Vertreter: **Rieder, Hans-Joachim, Dr. et al**
**Corneliusstrasse 45 Postfach 11 04 51**
**D-5600 Wuppertal 11 (DE)**

**Beschreibung**

Die Erfindung betrifft einen Reißwolf für die Textilindustrie gemäß Oberbegriff des Anspruchs 1.

Ein derartiger Reißwolf ist aus der DE-AS 15 10 320 bekannt, wobei in Fig. 1 dieser Schrift die Reißstifte als rein zufälliges Ergebnis geneigt zur Trommelradialen stehen. In der eine detaillierte Darstellung zeigenden Fig. 2 dieser Schrift wird dagegen die radiale Ausrichtung der Reißstifte herausgestellt. Dies entspricht der üblichen Anordnung der Reißstifte an Reißwölfen.

Bezüglich der Reißstifte handelt es sich in bekannter Weise einerseits um flach- oder schwertförmige Stifte, die sich zum besseren Vorreißen eignen. Zum Feinausreißen dagegen werden andererseits bevorzugt runde Stifte eingesetzt. Es erfolgt jedoch stets eine radiale Anordnung dieser Stifte. Dies ermöglicht es, nach Abnutzung der in Umfangsrichtung weisenden Spitzen der Schmalflächen die Spitzen bzw. die sie haltenden Tragleisten um 180° zu wenden. Dem Gegenstand der Erfindung liegt die Aufgabe zugrunde, einen Reißwolf der in Rede stehenden Art in herstellungstechnisch einfacher Weise so auszugestalten, daß neben einer geringeren Kürzung der Faserlänge gegenüber den bekannten Ausgestaltungen mit erheblich größerer Zuführgeschwindigkeit gearbeitet werden kann.

Gelöst wird diese Aufgabe durch die im Kennzeichen des Anspruchs 1 angegebenen Merkmale.

Die Unteransprüche stellen vorteilhafte Weiterbildungen dar.

Zufolge derartiger Ausgestaltung ist ein gattungsgemäßer Reißwolf angegeben, der sich durch eine größere Wirtschaftlichkeit auszeichnet. Im Gegensatz zu vergleichbaren Reißwölfen ist die Leistung etwa um das Dreifache höher. Das bedeutet, daß mit größerer Zuführgeschwindigkeit gearbeitet werden kann. Trotz der dann das Dreifache betragenden Zuführgeschwindigkeit wird der angestrebte Auflösungsgrad der Fasern erzielt. Ferner bringt die Flachform der Stifte und deren Ausrichtung eine geringere Kürzung der Faserlänge gegenüber den bekannten Reißwölfen, was wichtig für die Weiterverarbeitung ist. Ein weiterer wesentlicher Vorteil ist darin zu sehen, daß der Antrieb für die Reißtrommel geringer dimensioniert werden kann, da die Stifte in das zu zerreißende Material eintauchen und dabei noch einen Kämmeffekt erzeugen. Die Stifte beim Stand der Technik sind dagegen einem Schlageffekt ausgesetzt verbunden mit einer erhöhten Abnutzung, so daß die erfindungsgemäßen Stifte trotz eines Verzichts auf Umwendbarkeit etwa eine Standzeit wie die Stifte gemäß Stand der Technik besitzen. Selbst wenn die Standzeit etwas darunter liegen sollte, überwiegen die durch die erfindungsgemäße Anordnung erzielten Vorteile den Verzicht auf eine Umwendbarkeit der Stifte. Je nach dem zu verarbeitenden Rohmaterial, Auflösungsgrad und Leistung des Reißwolfes ist eine entsprechende Anzahl von hintereinandergeschalteten Reißtrommeln vorzusehen, die mit den entsprechenden Stiften zu bestücken ist. Der Eintaucheffekt der Stifte in das zu zerreißende Material ist dabei durch die in eine Rundspitze auslaufende Flachform der Stifte verbessert. Zur Herstellung der Stifte eignet sich insbesondere Rundmaterial, welches durch Ablängen und Pressen in die gewünschte Flachform gebracht wird. Das Flachpressen erfolgt derart, daß anschließend eine kreisrund gestaltete Wurzel vorliegt, die in Verbindung mit der Flachform eine stabile Fesselung der Flachstifte erlaubt. Es ist jedoch auch möglich, auf diese Weise schwertförmige Stifte zu erzeugen, so daß nach dem Pressen die Breitflächen ballig verlaufen unter Erzielung eines etwa linsenförmigen Querschnitts. Die entsprechende Gestaltung der Stifte hängt dabei jedoch ab vom Material und der Anzahl der eingesetzten Reißstifte. Die Halterung der Reißstifte ist optimal, wenn die Breitflächen in die die Wurzel passend umgreifende Halterungsbohrung der Trommelmantelfläche formschlüssig eintauchen. Dadurch finden sowohl die Breitflächen als auch die Wurzel eine gute Abstützung in der Halterungsbohrung. Versuche haben ergeben, daß ein Neigungswinkel in Umfangsrichtung von etwa 20° der Stifte zu einer hohen Leistungssteigerung führt. Ein weiteres günstiges Merkmal ist darin zu sehen, daß die Randkanten der Breitflächen etwa über ein Drittel der Stiftlänge zur Spitze hin konvergierend verlaufen. Eine gewisse Elastizität der Stifte in Umfangsrichtung läßt sich dadurch erzeugen, daß der Konvergierungsverlauf innerhalb der Halterungsbohrung ansetzt. Hinsichtlich einer Befestigung der Reißstifte ist es günstig, diese in an sich bekannten, aus Schichthartholz bestehenden Tragleisten einzubetten derart, daß ihre Spitzen überstehen. Eine entsprechende Anzahl von um die Trommelmantelfläche angeordneten Tragleisten stellt dann den Trommelmantel dar. Es besteht daher die Möglichkeit, bei Beschädigung einzelner Stifte, beispielsweise verurscht durch harte Gegenstände, die entsprechenden Tragleisten auszuwechseln. Um dieses vornehmen zu können, empfiehlt sich eine Schraubbefestigung der Tragleisten an der Reißtrommel.

Nachstehend wird ein Ausführungsbeispiel der Erfindung anhand der Figuren 1 bis 5 erläutert. Es zeigt

Fig. 1 in schematischer Darstellung einen Längsschnitt durch einen zwei hintereinander angeordnete Reißtrommeln aufweisenden Reißwolf,

Fig. 2 in etwa natürlicher Größe einen Ausschnitt der im Querschnitt gezeichneten Reißtrommel mit in den Tragleisten sitzenden Reißstiften,

Fig. 3 eine Draufsicht auf Fig. 2,

Fig. 4 in stark vergrößerter Darstellung einen in eine Halterungsbohrung der Tragleiste eingesetzten Reißstift und

Fig. 5 in perspektivischer Darstellung einen Reißstift, stark vergrößert.

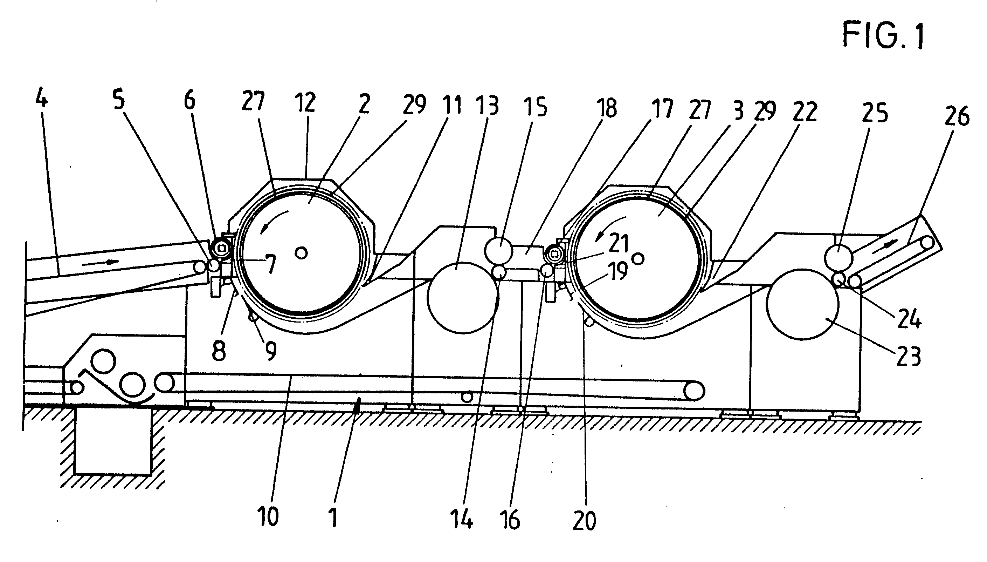

Der in Fig. 1 dargestellte Reißwolf besitzt ein Maschinengestell 1, in welchem zwei hintereinander angeordnete Reißtrommeln 2, 3 gelagert und in der dargestellten Pfeilrichtung angetrieben sind. Der einlaufseitigen Reißtrommel 2 ist ein in Pfeilrichtung umlaufendes Zuführband 4 vorgeordnet. Auf letzterem gelangt das zu zerreißende Material zu einer auf Höhe des Zuführbandes liegenden Transportwalze 5, welcher eine Gummiwalze 6 gegenüberliegt. Letztere taucht in eine Mulde 7 ein. Von hier gelangt das zu zerreißende Material in den Arbeitsbereich der Reißtrommel 2.

Unterhalb der Mulde 7 erstreckt sich ein verschwenkbares Pitzenblech 8, das in Gegenüberlage zu einem verstellbaren Pitzenmesser angeordnet ist. Die nicht geöffneten Teile des zu zerreißenden Materials fallen zwischen dem Pitzenblech 8 und dem Pitzenmesser 9 auf ein Pitzenrückführband 10, welches die nicht geöffneten Teile bzw. Pitzen wieder dem Zuführband 4 zubringt.

In diametraler Gegenüberlage zur Gummiwalze 6 ist ein Abstreifer 11 vorgesehen, so daß das geöffente Material in Drehrichtung nicht weiter mitgenommen wird und dabei eine die Reißtrommel 2 überfangende Haube 12 durchläuft.

Die von der ersten Reißtrommel 2 geöffneten Teile werden durch eine zwischen den Reißtrommeln 2, 3 angeordnete, unter Unterdruck stehende Siebtrommel 13 bis in den Bereich einer Transportwalze 14 weitergefördert. Letztere stellt in Verbindung mit einer oberhalb ihr angeordneten Andrückwalze 15 den Durchtrittspalt für das geöffnete Material dar. Letzteres gelangt sodann in den Bereich einer der zweiten Reißtrommel 3 vorgeordneten Transportwalze 16, die ihrerseits ebenfalls mit einer Gummiwalze 17 zusammenwirkt. Das entsprechende geöffnete Material durchläuft dabei auf dem Weg zwischen den Walzen 14, 15 und 16, 17 einen Vlieskanal 18.

In gleicher Anordnung sind der zweiten Reißtrommel ein Pit zenblech 19 und ein Pitzenmesser 20 zugeordnet. Ferner wirkt die Gummiwalze 17 mit einer Mulde 21 zusammen. Schließlich ist der zweiten Siebtrommel 23 auch ein entsprechender Abstreifer 22 benachbart, welcher dafür sorgt, daß die geöffneten Teile vollständig zu der nachgeordneten, ebenfalls einem Unterdruck ausgesetzten Siebtrommel 23 gelangen. Über eine derselben nachgeordnete Transportwalze 24 und Andrückwalze 25 wird das in Form eines Vlieses austretende Material auf ein nachgeschaltetes Abführband 26 gefördert, welches in der dargestellten Pfeilrichtung umläuft.

Damit auch die von der zweiten Reißtrommel 3 nicht geöffneten Teile erneut den Reißprozeß durchlaufen, erstreckt sich das Pitzenrückführband 10 bis unter die zweite Reißtrommel 3.

Die Trommelmantelfläche 27 dieser Reißtrommeln 2, 3 ist mit Reißstiften 28 bestückt. Zu ihrer Halterung dienen aus Schichthartholz bestehende Tragleisten 29, die, an ihren Schmalkanten anliegend, um die Trommelmantelfläche herumgelegt sind.

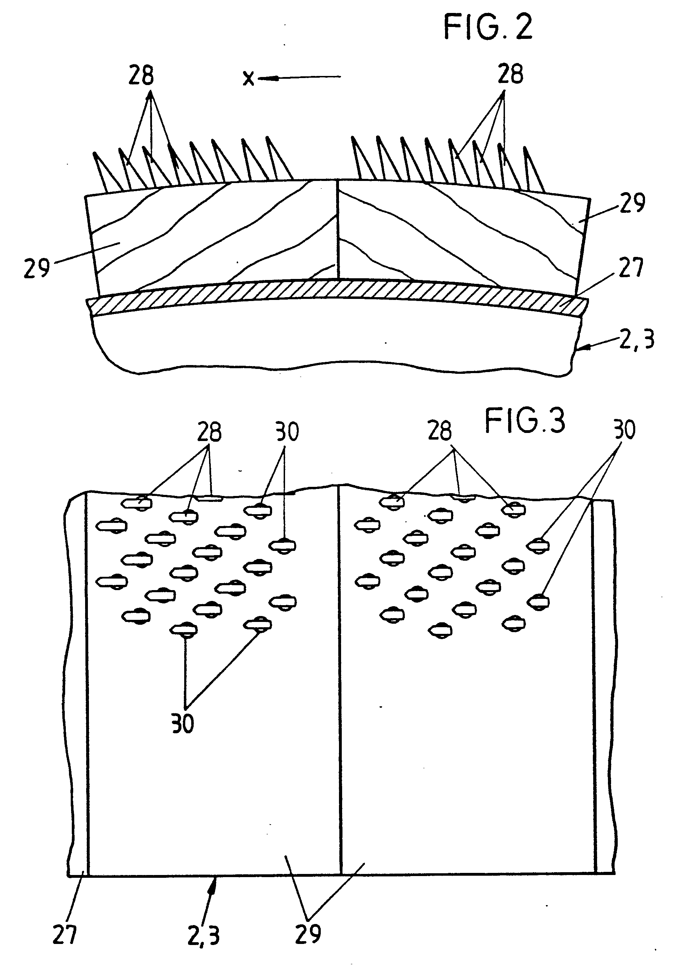

Zur Aufnahme der Reißstifte 28 besitzt jede Tragleiste 29 Halterungsbohrungen 30, welche in diagonal zur Umlaufrichtung x liegenden Reihen angeordnet sind, vergleiche Fig. 3.

Jede Halterungsbohrung 30 verläuft geneigt zur Trommelradialen R derart, daß das obere Ende der Bohrung der Trommeldrehrichtung x zugekehrt ist. Zur Aufnahme der in Flachform gestalteten Reißstifte 28 gehen von jeder Halterungsbohrung 30 zwei sich diametral gegenüberliegende, in Trommeldrehrichtung angeordnete Innennuten 31 aus. Hierdurch wird eine undrehbare Anordnung der Reißstifte 28 in den Halterungsbohrungen 30 gewährleistet.

Jeder Reißstift 28 besitzt eine im Querschnitt kreisrund gestaltete Wurzel 32, welche über zwei sich gegenüberliegende, segmentförmige Radialstufen 33 in parallel zueinander angeordnete Breitflächen übergeht. Diese erstrecken sich bei eingesetzten Reißstiften parallel zur Trommeldrehrichtung x. Die vorgenannte Wurzel 32 wird passend von der Halterungsbohrung in dem der Trommelmantelfläche 27 zugekehrten Bereich umgriffen und liegt dort im Klemmsitz ein, während die die Breitflächen 34 verbindenden, leicht gewölbt verlaufenden Randkanten 35 in die Innennuten 31 eintauchen.

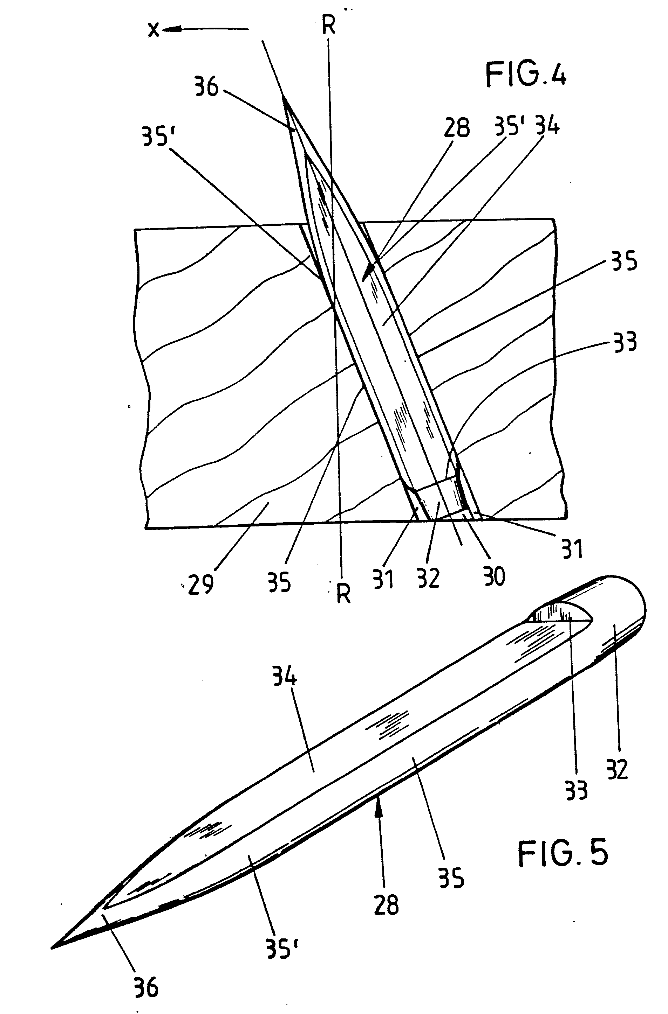

Aus der Fig. 4 ist ersichtlich, daß die Randkanten der Breitflächen 34 etwa über ein Drittel der gesamten Stiftlänge zur Spitze 36 hin konvergierend verlaufen. Das bedeutet, daß die Randkanten 35 aus ihrer parallelen Anordnung in den konvergierenden Verlauf übergehen, und zwar über leichte Krümmungsbögen 35'. Bezüglich der Spitze 36 handelt es sich um eine Rundspitze, in welche die Flachform der Stifte ausläuft, siehe Fig. 4 und 5. Aus Fig. 4 ist sodann noch zu entnehmen, daß der Konvergierungsverlauf innerhalb der Halterungsbohrung 30 ansetzt, so daß der die Tragleiste 29 überragende Bereich der Reißstifte bei größerem Widerstand um ein gewisses Maß federnd auszuweichen vermag. Bezüglich der Reißstifte ist härtbares Stahlmaterial gewählt, welches demgemäß die entsprechende Härte und Federung besitzt.

Der Querschnitt der vorbeschriebenen Reißstifte 28 ist etwa rechteckförmig gestaltet. Die entsprechende Rechteckform wird durch Flachpressen von auf entsprechende Länge gebrachten Drahtabschnitten erzielt, wobei die Radialstufen 33 entstehen. Es ist jedoch auch möglich, die Breitflächen gewölbt zu gestalten, so daß sich ein etwa flachlinsenförmiger Querschnitt ergibt. Solche Stifte werden dann als sogenannte Schwertstifte bezeichnet.

Alle in der Beschreibung erwähnten und in der Zeichnung dargestellten neuen Merkmale sind erfindungswesentlich, auch soweit sie in den Ansprüchen nicht ausdrücklich beansprucht sind.

## Patentansprüche

1. Reißwolf für die Textilindustrie mit mindestens einer der Zuführeinrichtung für die nicht aufgeschlossenen Lumpen oder dergleichen nachgeordneten Reißtrommel, deren Mantelfläche mit Reißstiften bestückt ist, dadurch gekennzeichnet, daß die, mit ihren Spitzen in Umfangsrichtung weisend, en Reißstifte geneigt zur Trommelradialen stehen, und, daß die in Flachform gestalteten Stifte (28) derart angeordnet sind, daß die seitlichen Breitflächen (34) parallel zur Trommeldrehrichtung (x) liegen.

2. Reißwolf nach Anspruch 1, dadurch gekennzeichnet, daß die Flachform der Stifte (28) in eine Rundspitze ausläuft.

3. Reißwolf nach einem oder mehreren der vorhergehenden Ansprüche, gekennzeichnet durch eine im Querschnitt kreisrund gestaltete Wurzel (32) der Stifte (28), die über segmentförmige Radialstufen (33) in die Breitflächen (34) übergeht.

4. Reißwolf nach einem oder mehreren der vorhergehenden Ansprüche, dadurch gekennzeichnet, daß die Breitflächen (34) in die die Wurzel (32) passend umgreifende Halterungsbohrungen (30) der Trommelmantelfläche (27) formschlüssig eintauchen.

5. Reißwolf nach einem oder mehreren der vorhergehenden Ansprüche, dadurch gekennzeichnet, daß der Neigungswinkel in Umfangsrichtung etwa 20° beträgt.

6. Reißwolf nach einem oder mehreren der vorhergehenden Ansprüche, dadurch gekennzeichnet, daß die Randkanten (35) der Breitflächen (34) etwa über ein Drittel der Stiftlänge zur Spitze (36) hin konvergierend verlaufen.

7. Reißwolf nach einem oder mehreren der vorhergehenden Ansprüche, dadurch gekennzeichnet, daß der Konvergierungsverlauf innerhalb der Halterungsbohrung (30) ansetzt.

8. Reißwolf nach einem oder mehreren der vorhergehenden Ansprüche, gekennzeichnet durch eine auf der Trommelmantelfläche angeordnete, die Halterungsbohrungen (30) besitzende Tragleiste (29).

**Revendications**

1. Loup-ouvreur pour l'industrie textile, comportant au moins un cylindre-ouvreur en aval d'une installation d'alimentation pour des paquets de produits textiles ou analogues, non ouverts, cylindre dont la surface périphérique est garnie d'aiguilles, loup-ouvreur caractérisé en ce que les aiguilles dont les pointes sont tournées dans le sens de rotation, sont inclinées par rapport à la direction radiale du cylindre et ces aiguilles (28) de forme plate sont montées de manière que leurs grandes surfaces latérales (34) soient parallèles à la direction de rotation (x) du tambour.

2. Loup-ouvreur selon la revendication 1, caractérisé en ce que la forme plate des aiguilles (28) se termine par une pointe de section ronde.

3. Loup-ouvreur selon l'une ou plusieurs des revendications précédentes, caractérisé en ce que l'aiguille (28) présente une base (32) de section circulaire qui rejoint les grandes surfaces (34) par un gradin radial (33) en forme de segment.

4. Loup-ouvreur selon l'une ou plusieurs des revendications précédentes, caractérisé en ce que les grandes surfaces (34) viennent dans des perçages de fixation (30) entourant étroitement les bases (32), dans la surface périphérique (27) du cylindre, par une liaison par la forme.

5. Cylindre-ouvreur selon l'une ou plusieurs des revendications précédentes, caractérisé en ce que l'angle d'inclinaison correspond sensiblement à un arc d'environ 20°.

6. Loup-ouvreur selon l'une ou plusieurs des revendications précédentes, caractérisé en ce les arêtes (35) des grandes surfaces (34) convergent sur sensiblement un tiers de la longueur de l'aiguille jusque vers la pointe (36).

7. Loup-ouvreur selon l'une ou plusieurs des revendications précédentes, caractérisé en ce que la forme convergente s'appuie dans le perçage de fixation (30).

8. Loup-ouvreur selon l'une ou plusieurs des revendications précédentes, caractérisé par un longeron de support (29) prévu à la surface périphérique du cylindre et qui est muni des perçages de fixation (30).

**Claims**

1. Tearing machine for the textile industry having at least one tearing cylinder which is arranged downstream from the feed device for the non-pretreated rags or the like and the outer surface of which is fitted with tearing pins, characterized in that the tearing pins pointing with their tips in circumferential direction are inclined relative to the cylinder radius, and in that the pins (28), designed to have a flat shape, are arranged in such a way that the lateral broad surfaces (34) lie parallel to the direction (x) of rotation of the cylinder.

2. Tearing machine according to Claim 1, characterized in that the flat shape of the pins (28) tapers into a round tip.

3. Tearing machine according to one or more of the preceding claims, characterized by a root (32) of the pins (28), which root is designed to have a circular cross-section and makes a transition via segment-shaped radial steps (33) into the broad surfaces (34).

4. Tearing machine according to one or more of the preceding claims, characterized in that the broad surfaces (34) are immersed positively into the anchorage bore holes (30) of the outer surface (27) of the cylinder, snugly enclosing the root (32).

5. Tearing machine according to one or more of the preceding claims, characterized in that the angle of inclination in the circumferential direction is approximately 20°.

6. Tearing machine according to one or more of the preceding claims, characterized in that the edges (35) of the broad surfaces (34) extend in a converging manner towards the tip (36) approximately over a third of the length of the pin.

7. Tearing machine according to one or more of the preceding claims, characterized in that the converging extension begins inside the anchorage bore hole (30).

8. Tearing machine according to one or more of the preceding claims, characterized by a bearing strip (29) arranged on the outer surface of the cylinder and exhibiting the anchorage bore holes (30).

FIG.1

EP 0 293 590 B1

FIG.2

28    X ←    28

29

29    27

2,3

28    30    28    30    FIG.3

30

27    2,3    29

FIG.4

FIG.5